# EUROPEAN PATENT APPLICATION

(11) **EP 4 708 551 A1**
(43) Date of publication of application: **11.03.2026**
(21) Application number: 25191789.4
(22) Date of filing: 25.07.2025
(51) Int. Cl.: H01M 50/566

(54) **ASSEMBLY METHOD FOR SECONDARY BATTERY, SECONDARY BATTERY, BATTERY PACK, AND ELECTRONIC DEVICE**

(30) Priority: 09.09.2024 CN 202411258922
(71) Applicant: AESC Japan Ltd., Yokohama-Shi, Kanagawa 220-0012 (JP)
(72) Inventor: Li, Qiankun, Jiangyin City, Wuxi City 214443 (CN)
(74) Representative: Becker, Eberhard

(57) **Abstract**

Disclosed are an assembly method for a secondary battery (1), a secondary battery (1), a battery pack (8) and an electronic device (9). The assembly method for the secondary battery (1) includes the following steps: an assembly step, assembling a current collector (30) and a terminal (40), so that a wall portion (405) of the terminal (40) abuts against the current collector (30); a welding step, irradiating a laser spot on the wall portion (405), and moving the laser spot along a helical trajectory, welding the wall portion (405) and the current collector (30) to form a weld mark (60), wherein, on a cross-section passing through a terminal axis, the weld mark (60) extends from a first end (60a) located on a surface of the wall portion (405) facing away from the current collector (30) to a second end (60b) located inside the current collector (30).

## Description

### BACKGROUND

### Technical Field

The present disclosure relates to battery pack technology, and specifically relates to an assembly method for a secondary battery, a secondary battery, a battery pack, and an electronic device.

### Description of Related Art

In related art, the welding of battery terminals and current collectors typically involves applying welding energy from one side of the current collector to weld the terminal and the current collector together. This welding method causes that the welding slag directly faces the interior of the battery, which increases the possibility of foreign matter generated within the battery and adversely affects the safety performance of the battery.

To prevent foreign matter from being generated within the battery and enhance assembly efficiency, the method of welding the terminal and current collector via laser penetration welding from the outer side of the terminal is now a popular choice in the field. However, due to the difficulty in controlling laser penetration welding and the challenge of maintaining uniform and stable depth of a molten pool, technical issues such as false welding and burn-through are prone to occur.

### SUMMARY

The present disclosure provides an assembly method for a secondary battery, a secondary battery, a battery pack, and an electronic device, which may improve the stability of a welding structure of a terminal and a current collector.

A first aspect of the present disclosure provides an assembly method for a secondary battery, and the assembly method includes the following steps:
An assembly step: Assembling a current collector and a terminal, so that a wall portion of the terminal abuts against the current collector;
A welding step: Irradiating a laser spot on the wall portion, and moving the laser spot along a helical trajectory, welding the wall portion and the current collector to form a weld mark, wherein, on a cross-section passing through a terminal axis, the weld mark extends from a first end to a second end, the first end is located on a surface of the wall portion facing away from the current collector, and the second end is located inside the current collector.

Optionally, in the welding step, the laser spot rotates from inside to outside along the helical trajectory.

Optionally, a center of the wall portion is provided with a liquid injection hole, and in the welding step, the laser spot rotates around the liquid injection hole from outside to inside along the helical trajectory.

Optionally, the center of the wall portion is provided with the liquid injection hole, and the welding step includes:
A first welding step: The laser spot rotates around the liquid injection hole from outside to inside along a trajectory of a first helical line to form a first helical line weld mark;
A second welding step: The laser spot rotates from inside to outside along a trajectory of a second helical line to form a second helical line weld mark;

The second helical line weld mark surrounds the first helical line weld mark.

Optionally, a middle portion of the current collector has a protruding portion that protrudes toward one side of the terminal. A portion where the wall portion and the protruding portion contact each other constitutes a contact surface. The contact surface has a central region and an edge region. In the welding step, a movement of the laser spot starts from the central region and ends at the edge region. The weld mark located in the edge region surrounds the weld mark located in the central region.

Optionally, in the welding step, an optical magnification ratio of the laser spot is 2.5 to 3.5 times.

Optionally, a wavelength of the laser spot is 600 nm to 1200 nm.

Optionally, the helical trajectory is an Archimedean helical trajectory.

Optionally, in the welding step, a laser galvanometer is utilized to control the laser spot to move along the helical trajectory at a speed of 300 mm/s or higher.

Optionally, a focus of the laser spot is located on one side of the wall portion away from the current collector.

A second aspect of the present disclosure provides a secondary battery, which includes a housing, an electrode assembly and a current collector. The housing includes an end plate and a side wall portion surrounding the end plate. The end plate has an opening portion. The electrode assembly is accommodated inside the housing. The current collector is disposed between the electrode assembly and the end plate, and is electrically connected to the electrode assembly. The terminal passes through the opening portion and is fixed to the end plate. The terminal includes a wall portion, the wall portion is welded with the current collector to form a weld mark, and the weld mark has a helical trajectory. On a cross-section passing through a terminal axis, the weld mark extends from a first end to a second end. The first end is located on a surface of the wall portion facing away from the electrode assembly, and the second end is located inside the current collector.

Optionally, a middle portion of the current collector has a protruding portion that protrudes toward one side of the terminal. A portion where the wall portion and the protruding portion contact each other constitutes a contact surface. The contact surface has a central region and an edge region. A movement direction of the weld mark along the laser spot starts from the central region and ends at the edge region. The weld mark located in the edge region surrounds the weld mark located in the central region.

A third aspect of the present disclosure provides a battery pack. The battery pack includes a plurality of secondary batteries. The secondary battery is the secondary battery provided in the second aspect of the present disclosure.

A fourth aspect of the present disclosure further provides an electronic device. The electronic device includes the battery pack provided in the third aspect of the present disclosure.

### BRIEF DESCRIPTION OF THE DRAWINGS

FIG. 1 is a schematic view of an internal structure of a secondary battery provided in a first embodiment of the present disclosure.
FIG. 2 is a cross-sectional view of a positive electrode terminal assembly of the secondary battery provided in the first embodiment of the present disclosure.
FIG. 3 is a top view of the positive electrode terminal assembly in FIG. 2.
FIG. 4 is a schematic view of a helical traveling trajectory of a laser spot in the first embodiment.
FIG. 5 is a flow chart of an assembly method for the secondary battery provided in the first embodiment.
FIG. 6 is a cross-sectional view of a positive electrode terminal assembly in a second embodiment.
FIG. 7 is a schematic view of a center trajectory corresponding to a weld mark in the second embodiment, i.e., a schematic view of a movement trajectory of the laser spot.
FIG. 8 is a schematic view of a battery pack provided in an embodiment of the present disclosure.
FIG. 9 is a schematic view of an electronic device provided in an embodiment of the present disclosure, specifically a schematic view of a vehicle.

### DESCRIPTION OF THE EMBODIMENTS

The technical solutions in the embodiments of the present disclosure will be described clearly and thoroughly below in conjunction with the drawings in the embodiments of the present disclosure. Clearly, the described embodiments are only portion of the embodiments of the present disclosure, not all of the embodiments. Based on the embodiments in the present disclosure, all other embodiments obtained by those of ordinary skill in the art without making creative efforts fall within the scope to be protected by the present disclosure.

### [Terms and Explanations]

The term "center trajectory" refers to a trajectory path formed by a laser spot as its center moves. In this embodiment, because a weld mark is formed by the laser spot moving along a specified path, and the centers of both substantially coincide, in the embodiments of the present disclosure, the center trajectory of the laser spot is the center trajectory of the weld mark.

The term "arm" refers to a curved line segment within a 2π angle range of a helix. Adjacent "arms" are two curved line segments with adjacent turning angles differing by 2π in a polar coordinate system. For example, two curved line segments of the helix with turning angles of 0-2π and 2π-4π constitute adjacent arms, and two curved line segments with turning angles of 2π-4π and 4π-6π also constitute adjacent arms.

In the present disclosure, unless otherwise specified, the term "penetration depth" refers to a distance from a first end to a second end of a weld mark in an axial direction of a terminal. Due to fluctuations in welding energy, this distance may be different at different welding positions.

### [First Embodiment]

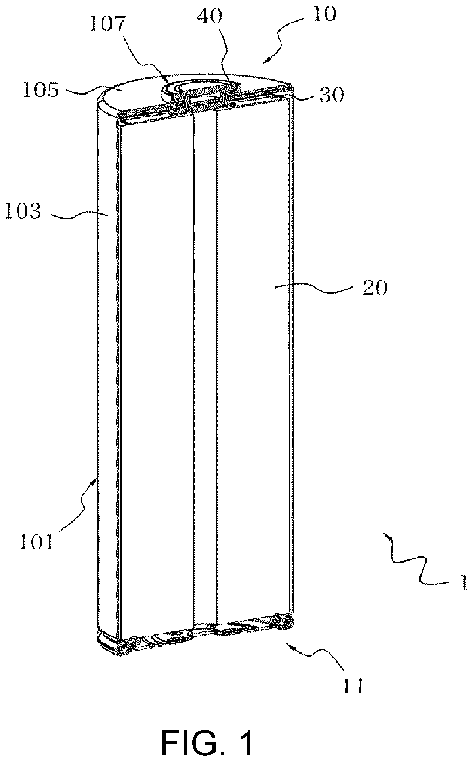

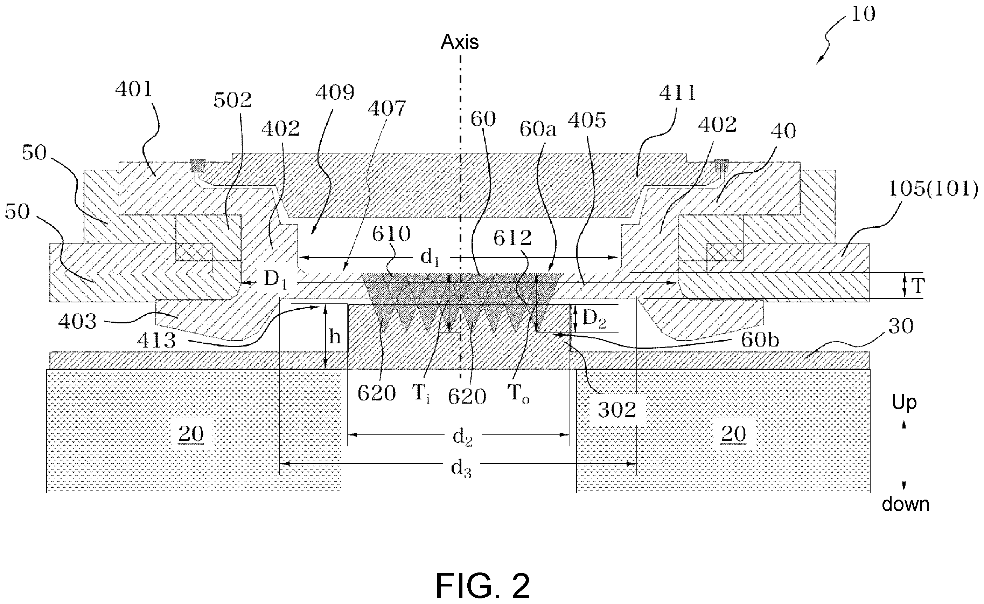

FIG. 1 is a schematic view of an internal structure of a secondary battery 1 provided in a first embodiment of the present disclosure. FIG. 2 is a cross-sectional view of a positive electrode terminal assembly 10 of the secondary battery 1 provided in the first embodiment of the present disclosure. Referring to FIG. 1 and FIG. 2, in this embodiment, the secondary battery 1 is a columnar secondary battery 1, that is, a cell unit packaged using a columnar housing 101.

The housing 101 may be made of materials such as copper, iron, aluminum, steel, aluminum alloy, etc. A side wall portion 103 of the housing 101 is columnar, and a hollow portion thereof is provided to accommodate an electrode assembly 20.

In FIG. 1, an upper end of the housing 101 is provided to form the positive electrode terminal assembly 10, and a lower end of the housing 101 is provided to form a negative electrode terminal assembly 11. The negative electrode terminal assembly 11 electrically connects one electrode of the electrode assembly 20 with the housing 101; the positive electrode terminal assembly 10 electrically connects the other electrode of the electrode assembly 20 with a positive electrode terminal 40, and electrically isolates the positive electrode terminal 40 and the housing 101.

The upper end of the housing 101 in FIG. 1, which is a structure of one end forming the positive electrode terminal assembly 10, is shown in FIG. 2. At this end, the side wall portion 103 integrally bends inward and extends to form an end plate 105 with a substantially flat configuration. An opening portion 107 is retained in the center of the end plate 105, thereby forming the positive electrode terminal assembly 10 at the opening portion 107. The end plate 105 and the side wall portion 103 may be integrally formed or may be a separate structure.

A thickness of the side wall portion 103 of the housing 101 may be approximately 0.2 mm to 0.6 mm, and a thickness of the end plate 105 may be slightly greater than the thickness of the side wall portion 103. For example, the end plate 105 may have a thickness of approximately 0.6 mm to 1.0 mm. Making the thickness of the side wall portion 103 relatively thin may increase a volume for accommodating the electrode assembly 20, thereby improving an energy density of the secondary battery 1. In the meantime, the thickness of the side wall portion 103 should not be too thin in order to increase the strength of the housing 101 and ensure the safety performance of the secondary battery 1. In some embodiments, a nickel plating layer may be formed on a surface of the housing 101 to prevent corrosion and rust.

The electrode assembly 20 of the secondary battery 1 is accommodated in a cavity formed by the columnar side wall portion 103 of the housing 101.

The electrode assembly 20 includes a positive electrode sheet, a separator, and a negative electrode sheet wound around an axial direction of the housing 101. The positive electrode sheet includes a positive electrode current collector and a positive electrode active substance layer coated on the positive electrode current collector. A first coated region coated with the positive electrode active substance layer and a first uncoated region not coated with the positive electrode active substance layer are formed on the positive electrode sheet. The first coated region and the first uncoated region are arranged along the axial direction of the housing 101. The first uncoated region extends to one end in a height direction of the secondary battery 1 beyond the separator and bends toward an axis of the housing 101 to form a stacked positive electrode tab. The negative electrode sheet includes a negative electrode current collector and a negative electrode active substance layer coated on the negative electrode current collector. A second coated region coated with a negative electrode active substance layer and a second uncoated region not coated with the negative electrode active substance layer are formed on the negative electrode sheet. The second coated region and the second uncoated region are arranged along the axial direction of the housing 101. The second uncoated region extends to the other end in the height direction of the secondary battery 1 beyond the separator and bends toward the axis of the housing to form a stacked negative electrode tab. The separator is disposed between the positive electrode sheet and the negative electrode sheet to isolate the positive electrode active substance layer and the negative electrode active substance layer. Taking the lithium-ion secondary battery 1 as an example, a material of the positive electrode current collector may be aluminium. The positive electrode active substance layer includes a positive electrode active substance, and the positive electrode active substance may be lithium cobalt oxide, lithium iron phosphate, ternary lithium, or lithium manganese oxide, etc. A material of the negative electrode current collector may be copper. The negative electrode active substance layer includes a negative electrode active substance, and the negative electrode active substance may be carbon or silicon, etc. A material of the separator may be PP (polypropylene) or PE (polyethylene), etc. The winding core structures known in the art may all be applied to the secondary battery 1 provided by the present disclosure, and will not be described in detail here.

The electrode assembly 20 may be immersed in an electrolyte (for example, an electrolytic solution). The electrolytic solution may be injected into a hollow cavity of the housing 101 via a liquid injection hole. The setting position of the liquid injection hole is not limited in this embodiment. The electrolyte may be salts containing lithium ions, and the electrolyte may be dissolved in an organic solvent for use.

As the organic solvent, the organic solvent may be selected from propylene carbonate (PC), ethylenecarbonate (EC), diethylcarbonate (DEC), dimethylcarbonate (DMC), dipropylcarbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), γ-butyrolactone, or mixtures thereof.

A current collector 30 is made of a conductive metal material, for example, aluminum, copper, or other materials. An end portion in a length direction of the electrode assembly 20 is bent and extends in a direction parallel to the current collector 30, and the bent portion is combined with the current collector 30 to complete the electrical connection between the current collector 30 and the electrode assembly 20. A surface of the current collector 30 away from the electrode assembly 20 is combined with the positive electrode terminal, thereby utilizing the current collector 30 to collect and transfer current.

Referring to FIG. 2, in this embodiment, the current collector 30 of the positive electrode terminal assembly 10 is disposed between the electrode assembly 20 and the positive electrode terminal 40, specifically located on one side of the electrode assembly 20 close to the positive electrode terminal 40. A lower surface of the current collector 30 is combined with the electrode assembly 20, and an upper surface of the current collector 30 is welded and fixed to the positive electrode terminal 40 and electrically connected thereto.

A main body of the positive electrode terminal 40 is a columnar portion 402 having a columnar shape and passing through the opening portion 107. Both ends of the columnar portion 402 are provided with an outer flange portion 401 and an inner flange portion 403 extending radially outward from the columnar portion. The outer flange portion 401 is connected to one end of the columnar portion 402 located outside the housing 101, and the outer flange portion 401 covers the opening portion 107 in an axial projection. The inner flange portion 403 is connected to one end of the columnar portion 402 located inside the housing 101, and the inner flange portion 403 also covers the opening portion 107 in the axial projection. The columnar portion 402 has a groove 409, and a bottom of the groove 409 is a flat wall portion 405. The shapes and dimensions of the outer flange portion 401 and the inner flange portion 403 cooperate with the shape and dimension of an insulation portion 50 to fix a position of the positive electrode terminal 40 using the insulation portion 50. The insulation portion 50 is disposed between the positive electrode terminal 40 and the housing 101 to electrically isolate the positive electrode terminal 40 from the housing 101. The insulation portion 50 includes a seal ring 502. Both sides of the seal ring 502 respectively abut against an inner edge of the housing 101 and an outer edge of the positive electrode terminal 40 to ensure a sealing effect at this position. A material of the seal ring 502 may be ethylene propylene diene monomer rubber, fluorosilicone rubber, or fluororubber, but is not limited thereto.

A plane where the wall portion 405 is located is perpendicular to the axial direction (i.e., the up-down direction in FIG. 2) of the columnar secondary battery 1, and an outer edge of the wall portion 405 is connected to the columnar portion of the positive electrode terminal 40. In this embodiment, the wall portion 405 and the columnar portion of the positive electrode terminal 40 are integrally molded to enhance an overall strength of the positive electrode terminal 40 and improve the convenience of automated assembly.

The positive electrode terminal 40 is welded and fixed to the current collector 30 using the wall portion 405. Specifically, the welding of the wall portion 405 and the current collector 30 is completed using laser penetration welding. The laser penetration welding device projects a laser spot on an upper surface of the wall portion 405. The thermal effect of the laser spot rapidly generates a large amount of heat locally, causing the local temperature to rise rapidly, melting the metal of the wall portion 405 and producing a molten pool. In addition, the local high temperature can not only melt the wall portion 405 penetratingly, but the heat can also be transferred from the wall portion 405 to the upper surface of the current collector 30, melting a portion of the metal material on the upper surface of the current collector 30, thereby forming a weld mark 60 that penetrates the wall portion 405 and embeds into the current collector 30 as viewed from the cross-sectional direction of FIG. 2. Referring to FIG. 2, in a direction from the positive electrode terminal 40 toward the current collector 30, and starting from the upper surface of the wall portion 405 of the positive electrode terminal 40, the weld mark 60 penetrates the wall portion 405 and extends to the position embedded in the current collector 30.

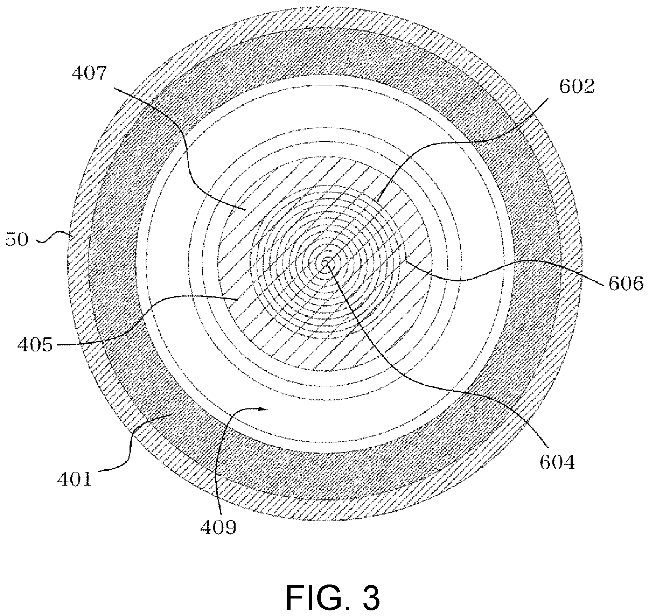

FIG. 3 is a top view of the positive electrode terminal assembly 10 in FIG. 2. FIG. 3 specifically shows the shape of a center trajectory 602 of the laser spot traveling on the upper surface of the wall portion 405. Referring to FIG. 3, based on the center trajectory 602 of the laser spot being helical, it can be known that the trajectory of the weld mark 60 will also be helical as a whole. The helical center trajectory 602 (i.e., the helical trajectory) has a starting end 604 and a finishing end 606, with multiple arms 608 provided between the starting end 604 and the finishing end 606. The movement of the laser spot may start from a radially outer end of the helix, or may start from a helical line center 618. In other words, the starting end 604 of the weld mark 60 may be located at the outer end of the helix, or may be located at the helical line center 618. FIG. 3 is illustrated with the starting end 604 located at the helical line center 618, but this does not constitute a limiting description.

Because the center trajectory 602 of the laser spot is in a helical form, the laser spot will not pass through the same position twice. That is, the center trajectory 602 of the laser spot neither overlaps nor intersects. In some embodiments, the helix may be an Archimedean helix, a distance between two adjacent arms 608 of the center trajectory 602 of the laser spot is fixed, a distribution of the weld mark 60 is uniform, and a thermal influence between each curved portion is small. In some other embodiments, the helix may also be other forms, such as any suitable type of two-dimensional spiral like Fermat helix, equiangular helix, etc.

The laser spot passing through the same point twice or multiple times will cause increased local penetration depth, or lead to problems of metal spattering and burst points. In this embodiment, by adopting the helical form of the center trajectory 602 of the laser spot, in the traveling path of the laser spot, the spot will not pass through the same point twice, which may reduce the thermal influence between two adjacent curved portions of the weld mark 60, so that the consistency of penetration depth is improved. It is possible to avoid welding through the current collector 30 or local false welding, and the stability of the welding process is ensured.

It should be noted that, although the diameter of the laser spot for laser penetration welding is small, the laser spot will not pass through the same point when traveling along the trajectory in FIG. 3. However, because the heat generated by the laser spot will spread laterally (left-right direction in FIG. 2) in the metal material, the weld mark 60 formed by the movement of the laser spot will have a specific width. Therefore, although the laser spots do not overlap, overlapping may occur between two adjacent curved portions of the weld mark 60 generated by the laser spot.

Additionally, the heat generated by the laser spot may also spread longitudinally (up-down direction in FIG. 2) in the metal material. During the heat transferring process, as the depth increases, the heat that may be transmitted to the deep portion of the material also attenuates accordingly, so the width of the deep portion of the formed molten pool will become narrower. Therefore, the cross-section of each weld mark in the weld mark 60 formed by laser penetration welding overall exhibits a triangle with a wider top surface and gradually decreasing width with increasing depth, that is, a triangle with a wider upper surface and gradually narrowed lower portion in FIG. 2.

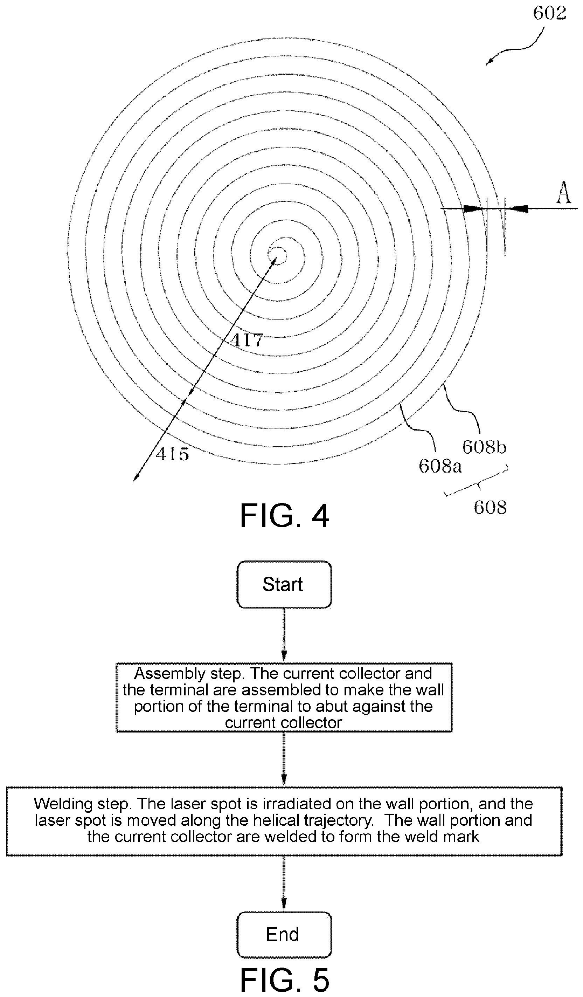

Referring to FIG. 2 and FIG. 3, in this embodiment, by setting the laser power and various parameters of the helical center trajectory 602 along which the laser spot travels, for example, by setting the parameter in the polar coordinate equation r=a+bθ of the Archimedean helix as b, it is possible to control the spacing between the two adjacent arms 608 (for example, an arm 608a and an arm 608b adjacent to each other in FIG. 4) of the helical center trajectory 602 along which the laser spot moves, thereby controlling the overlapping condition of two adjacent curved portions (for example, the curve corresponding to the arm 608a and the curve corresponding to the arm 608b in FIG. 4) of the weld mark 60.

Specifically, the overlapping portion of the two adjacent curved portions includes a first overlapping portion 610 and a second overlapping portion 612. In an embodiment of the present disclosure, based on the cross-sectional direction in FIG. 2, at the upper surface of the wall portion 405, that is, a first end 60a of the weld mark 60 away from the electrode assembly 20, the two adjacent curved portions of the weld mark 60 will overlap with each other, specifically referring to the first overlapping portion 610 in FIG. 2. In addition, at an upper end surface of the current collector 30, that is, at an end surface where the current collector 30 abuts against and is welded to the positive electrode terminal 40, the two adjacent curved portions of the weld mark 60 also overlap with each other, specifically referring to the second overlapping portion 612 in FIG. 2.

At a lower end of the weld mark 60, that is, a second end 60b of the weld mark 60 close to the electrode assembly 20, the two adjacent curved portions of the weld mark 60 are staggered from each other, that is, constituting a separated portion 620 of the two adjacent curved portions.

In view of the above features, it can be seen that from the cross-sectional direction in FIG. 2, the cross-section of the weld mark 60 as a whole exhibits a serrated shape, and the serrated weld mark 60 is embedded between the wall portion 405 and the current collector 30, which may effectively reduce secondary remelting of the molten pool and improve the welding strength between the wall portion 405 and the current collector 30. In some embodiments, by applying the welding method provided in the embodiments of the present disclosure, a breaking force between the positive electrode terminal 40 and the current collector 30 may be 50N or higher. The breaking force refers to a force applied to the positive electrode terminal 40 and the current collector 30 in the axial direction to separate them, and the breaking force may be measured by standard detection methods in the industry, which will not be elaborated here. In addition to the advantages in welding strength, because the two adjacent curved portions of the weld mark 60 overlap with each other (the second overlapping portion 612) at the upper end surface of the current collector 30, this welding structure may effectively ensure a welding area between the current collector 30 and the wall portion 405, thereby ensuring a current-carrying capacity between the current collector 30 and the positive electrode terminal 40.

In this embodiment, at the center of one of the wall portion 405 and the current collector 30, a protruding portion 302 is provided that protrudes toward the other one. In this embodiment, the protruding portion 302 is provided at the center of the current collector 30 and protrudes toward the wall portion 405. An upper end surface of the protruding portion 302 abuts against the center of the wall portion 405, and the positive electrode terminal 40 is welded and fixed to the upper end surface of the protruding portion 302 by utilizing the wall portion 405.

In laser penetration welding equipment for mass production of secondary batteries 1 in industrial applications, at an initial stage of welding, because a laser emitter needs preheating and a workpiece temperature is relatively low, the penetration depth of the molten pool obtained by welding is typically shallow. On the other hand, at the initial stage of welding, the output of the laser emitter is generally not stable, and there is a probability of burst points occurring. In order to improve effective penetration depth and prevent liquid leakage problems caused by the occurrence of burst points, in this embodiment, the laser beam (or laser spot) of laser penetration welding starts irradiating at the center of the wall portion 405 and rotates from inside to outside along the helical trajectory to obtain the weld mark 60. By setting the starting position of the laser beam at the center of the wall portion 405, even if burst point occurs due to unstable laser power at the beginning, the position where the burst point appears is also surrounded by a peripheral region 407. Because the peripheral region 407 is not prone to generating burst points and may be welded together relatively reliably, the path for electrolyte to flow via the wall portion 405 and the current collector 30 of the peripheral region 407 toward the position where the burst point appears is sealed by welding. In this way, even if burst point occurs, liquid leakage problems are not likely to occur.

In FIG. 2, for ease of illustration, only the case where a penetration depth Tᵢ at a middle position of the weld mark 60 equals a penetration depth Tₒ at an edge position of the weld mark 60 is illustrated. However, due to output power of laser and workpiece temperature, the penetration depth of the molten pool formed at the starting position of the laser beam is typically shallow. In the ultimately formed weld mark 60, for the case where the starting position of the laser beam is the helical line center 618 and rotates from inside to outside along the helical trajectory, the position with the shallowest penetration depth of the weld mark 60 will also correspondingly be located at the helical line center 618 of the weld mark 60. In other words, on the cross-section passing through the axis of the positive electrode terminal 40, the penetration depth Tᵢ at the middle position of the weld mark 60 is smaller than the penetration depth Tₒ at the edge position of the weld mark 60. It should be noted that what is compared here is the relative magnitude of penetration depth, that is, a distance between the first end 60a and the second end 60b of the weld mark 60 near the central region, and a distance between the first end 60a and the second end 60b of the weld mark 60 near the edge region. It is not required that the deepest point of the penetration depth at the middle position be precisely at the helical line center 618, nor is it required that the deepest point of the penetration depth at the edge position be precisely at the edge line. Furthermore, the comparison between Tᵢ<Tₒ is the deepest penetration position of each curved portion, from a comprehensive perspective. In other words, Tᵢ<Tₒ indicates that an average penetration depth at the deepest penetration of the curved portion at the middle position is smaller than the average penetration depth at the deepest penetration of the curved portion at the edge position. Since the circumference at the middle position is shorter, even if the penetration depth at the middle position is shallower, the actual contribution thereof to the effective penetration depth of the entire molten pool is still small. Therefore, compared to the scheme where the laser spot starts at the outer end of the helix, the scheme with laser spot starting at the helical line center 618 in this embodiment finally obtains the weld mark 60 with deeper effective penetration depth and higher welding strength.

Continuing to refer to FIG. 2, in this embodiment, the columnar portion 402 of the positive electrode terminal 40 has a groove 409 at the center. The wall portion 405 is located at the bottom of the groove 409, and the groove 409 has a wider upper end and a narrower lower end. Through the groove 409 with a wider upper end and a narrower lower end, the wall portion 405 is exposed, which may facilitate laser irradiation on the wall portion 405 during welding. Furthermore, a sealing pin 411 may be used to seal the groove 409. The sealing pin 411 is embedded in the groove 409 in a fitted manner, and a top surface of the sealing pin 411 is aligned with a top surface of the outer flange portion 401 of the positive electrode terminal 40. By using seam welding to weld and fix the sealing pin 411 to the positive electrode terminal 40, the sealing performance of the secondary battery 1 may be further enhanced. In some embodiments, referring to FIG. 2, a roughness R_{b} of an upper surface of the outer flange portion 401 may be configured to satisfy: R_{b}>0.5 mm, so as to improve an absorption rate of laser by metal and form a more stable welding process.

In some preferred embodiments, continuing to refer to FIG. 2, a diameter of a surface at one side of the wall portion 405 away from the electrode assembly 20 is d₁, an outer diameter of the columnar portion 402 is D₁, and d₁/D₁<0.75. Through the above configuration, not only may the positive electrode terminal 40 have a high bending strength, when an internal pressure of the secondary battery 1 is high, an acting force and a moment of the stress transmitted to the weld mark 60 portion are also small, thereby making the weld mark 60 portion less likely to fail when the internal pressure of the secondary battery 1 increases, thus improving the safety performance of the battery.

Preferably, a surface of the protruding portion 302 that contacts the wall portion 405, i.e., the upper end surface of the protruding portion 302 in FIG. 1 has a diameter d₂, a diameter of the lower surface of the wall portion 405 is d₃, the weld mark 60 is located within a range defined by a circle centered on the axis of the wall portion 405 with a diameter d_{y}, and d_{y}, d₂ and d₃ satisfy: d_{y}<2d₂-d₃. Because of assembly tolerances, the protruding portion 302 and the wall portion 405 may not be arranged coaxially. Through the above method, even if the protruding portion 302 and the wall portion 405 are assembled with a maximum off-axis deviation, as long as the weld mark 60 is positioned at the center of the wall portion 405 and the diameter satisfies the above relational expression, it may be ensured that the weld mark 60 can connect the wall portion 405 and the protruding portion 302, and the welding will not be located at a position underneath without corresponding to the protruding portion 302 to cause false welding, thereby facilitating welding positioning and ensuring the stability of welding quality.

In some embodiments of the present disclosure, a thickness of the wall portion 405 is T, a thickness of the protruding portion 302 is h, a value of T ranges from 0.3 mm to 1.5 mm, and a value of T/h ranges from 0.3 to 1. The value of T/h should not be too large or too small. When the value is greater than 1, the wall portion 405 that is too thick is difficult to be penetrated, and a large laser energy is required, and poor control may easily cause the molten pool to penetrate deeply into the protruding portion 302 or directly penetrate through the protruding portion 302, which will cause high thermal effects on the separator inside the electrode assembly 20, or even separator shrinkage will lead to short circuit between positive electrodes and negative electrodes. When the value of T/h is less than 0.3, the strength of the wall portion 405 itself is too small. Although it is easy to weld, deformation is likely to occur after welding. When gas is generated inside the battery, deformation under the action of the internal pressure may easily pull the weld mark 60 and cause the weld mark 60 to fracture. The value of T/h set within the above range is more preferred.

In some embodiments of the present disclosure, a roughness of the surface (i.e., the upper surface of the wall portion 405 in FIG. 2) of the wall portion 405 away from the electrode assembly 20 is Rₐ>0.5 mm. By increasing the roughness of the metal surface irradiated by the laser, the absorption rate of the laser by the metal may be effectively improved, thereby forming a more stable welding process and ensuring the consistency of the penetration depth of the molten pool.

FIG. 4 is a schematic view of the helical trajectory of the laser spot in this embodiment, that is, the center trajectory 602 of the laser spot or the weld mark 60. Referring to FIG. 4, in a preferred embodiment of the present disclosure, a spacing A between the two adjacent arms 608 of the helical trajectory of the laser spot, that is, a center spacing A between the two adjacent curved portions of the weld mark 60, satisfies: A=0.05 mm to 0.5 mm. Taking the helix as an Archimedean helix as an example, a polar coordinate equation thereof is r=a+bθ. Correspondingly, the spacing A between the two adjacent arms 608 of the helix is A=2πb. The spacing A should not be too large or too small. If A is too small, the thermal effects between two turns of weld mark 60 will be large, resulting in a high possibility of molten pool being welded twice, and the finally formed molten pool quality will be poor, which may easily cause a high risk of liquid leakage. If A is too large, the total welding area between the current collector 30 and the positive electrode terminal 40 will be small, affecting the current-carrying capacity at the weld mark 60. Considering the above factors, the spacing A within the range of 0.05 mm to 0.5 mm is preferred.

Continuing to refer to FIG. 2, in a preferred embodiment of the present disclosure, the thickness of the protruding portion 302 is h, where the thickness h is the thickness of the current collector 30 at the protruding portion 302 in the axial direction, the depth of the weld mark 60 embedded into the surface of the protruding portion 302 is D₂, and D₂/h=0.08~0.7. Since the weld mark 60 has different penetration depths at different positions, the depth of the weld mark 60 embedded into the surface of the protruding portion 302 also differs at different positions. The limitation on the embedding depth D₂ here means that the depth D₂ of the same weld mark 60 embedded into the surface of the protruding portion 302 at different positions should all satisfy the range of D₂/h=0.08~0.7.

The shallowest point where the weld mark 60 is embedded into the surface of the protruding portion 302 should satisfy D₂/h≥0.08. In the case of D₂/h<0.08, since the depth D₂ of the weld mark 60 entering the surface of the current collector 30 is too small, it is difficult to form an effective welding connection, the welding surface may be easily torn, and the welding strength cannot be ensured.

The deepest point where the weld mark 60 is embedded into the surface of the protruding portion 302 should satisfy D₂/h≤0.7. In the case of D₂/h>0.7, the high temperature generated by welding may be easily transferred to the interior of the electrode assembly 20 opposite to the current collector 30, which may burn the separator, causing the separator to shrink and fail to form effective isolation between the positive electrode sheets and the negative electrode sheets, resulting in the risk of internal short circuit of the battery.

It should be noted that in this embodiment, the welding of the positive electrode terminal 40 and the current collector 30 of the positive electrode terminal assembly 10 is taken as an example for illustration, but the welding method provided in this embodiment may also be applicable to the welding of the negative electrode terminal and the corresponding current collector, which is not limited in the present disclosure.

This embodiment also provides an assembly method for the secondary battery 1, and FIG. 5 is a flow chart of the assembly method. Referring to FIG. 5, the assembly method includes an assembly step and a welding step. In the assembly step, the current collector 30 and the positive electrode terminal 40 are assembled, specifically the protruding portion 302 of the current collector 30 is made to abut against the wall portion 405 of the positive electrode terminal 40.

In the welding step, the laser beam initially irradiates the central region 417 of the wall portion 405 (refer to FIG. 4), and then the laser beam is moved outward along the helical trajectory and stops at the edge region 415 (refer to FIG. 4), thereby completing the welding between the wall portion 405 and the protruding portion 302 using laser penetration welding to form the weld mark 60. In this embodiment, by using a laser spot movement that starts from the helical line center 618 and gradually moves outward along the helical trajectory, since the edge region 415 is the ending point where burst points are not easily generated, the weld mark 60 may surround the central region 417 and isolate the central region 417 where burst points are easily generated from the peripheral region 407 having liquid leakage paths. In this way, it is possible to prevent burst points from occurring at portions having liquid leakage paths, reducing the possibility of liquid leakage caused by burst points, and improving the effective penetration depth of the weld mark 60 to enhance the welding strength.

Through the above method, the welding portion between the positive electrode terminal 40 and the current collector 30 of the secondary battery 1 provided in this embodiment has the higher welding strength and the good current-carrying capacity, and the product safety and quality reliability are also more improved compared to current welding methods.

### [Second Embodiment]

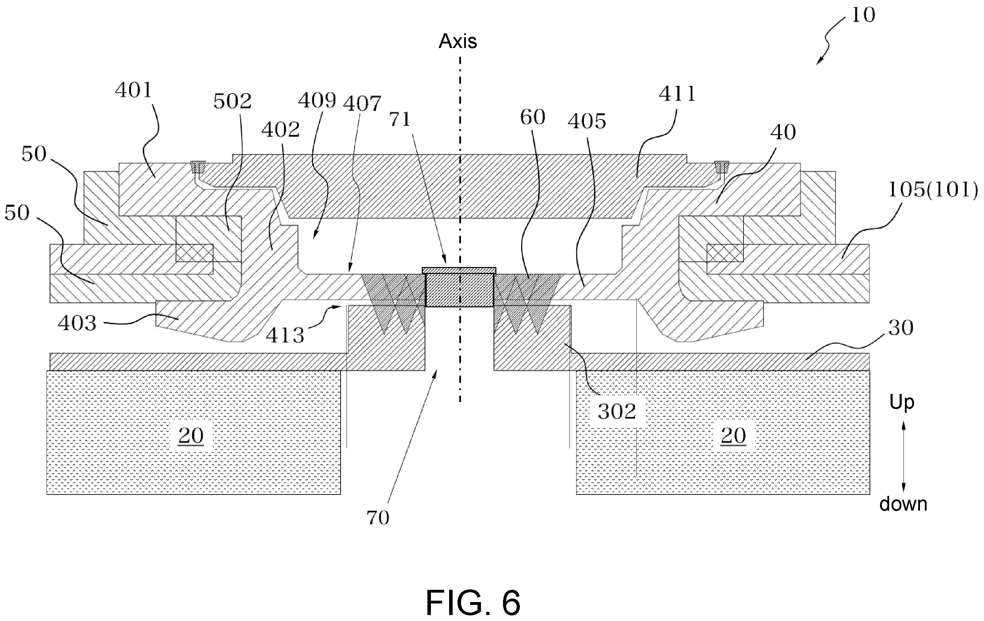

The second embodiment of the present disclosure provides the secondary battery 1, and FIG. 6 is a cross-sectional view of the positive electrode terminal assembly 10 in the second embodiment. The main structural difference between the secondary battery 1 of the second embodiment and the first embodiment is that in the second embodiment, both the center of the wall portion 405 of the positive electrode terminal 40 and the center of the protruding portion 302 of the current collector 30 are provided with liquid injection holes 70 having corresponding sizes and positions, through which a producer may inject electrolyte into the housing 101 of the secondary battery 1.

Because the liquid injection hole 70 is provided at the center of the wall portion 405 and the protruding portion 302, if burst points occur at positions close to the liquid injection hole 70 when the wall portion 405 and the protruding portion 302 are welded, the risk of liquid leakage may increase. The inventors of the present disclosure have found through research that in this situation, if burst points are generated around the liquid injection hole 70, the risk of liquid leakage is higher compared to the case where burst points are generated in the peripheral region 407. In some embodiments of the present disclosure, an assembly method for the secondary battery 1 is provided, wherein during the welding step, the laser spot rotates around the liquid injection hole 70 from outside to inside along the helical trajectory, and the welding between the wall portion 405 and the current collector 30 is completed using a single weld mark 60. Specifically, the starting end 604 may be disposed in the peripheral region 407, and the finishing end 606 may be disposed in a region close to the liquid injection hole 70, that is, the center trajectory 602 starts from the outer end of the helix, extends from outside to inside and terminates at a position close to the liquid injection hole 70. Because the output power is large and the workpiece temperature is high in the latter half of the welding process, this laser spot movement path will form a weld mark 60 in which the penetration depth Tᵢ at the middle position is greater than the penetration depth Tₒ at the edge position.

In other embodiments, another assembly method for the secondary battery 1 is also provided, in which two welding operations may be carried out to generate two weld marks 60 to address the liquid leakage problems at both the middle position and the edge position.

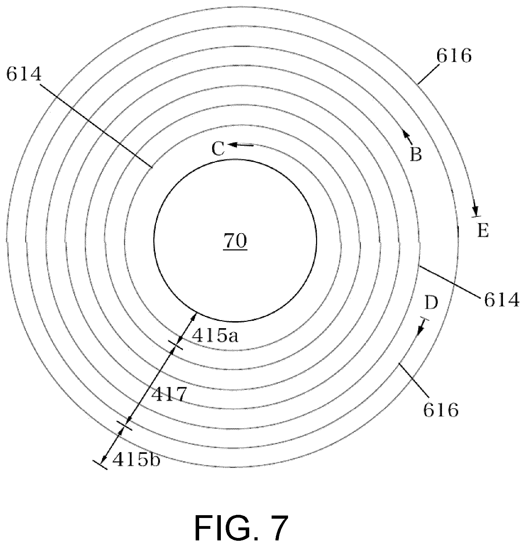

FIG. 7 is a schematic view of the center trajectory 602 corresponding to the weld mark 60 in the embodiment, i.e., a schematic view of a movement trajectory of the laser spot.

Referring to FIG. 7, in this embodiment, the center trajectory 602 of a first helical line weld mark is a first helical line 614, the center trajectory 602 of a second helical line weld mark is a second helical line 616, and the first helical line 614 and the second helical line 616 may be different portions of the same helical line, or may be different helical lines.

The welding step may include a first welding step and a second welding step. In the first welding step, the laser spot rotates around the liquid injection hole 70 from outside to inside along the trajectory of the first helical line 614. In the second welding step, the laser spot rotates from inside to outside along the trajectory of the second helical line 616 to form a second helical line weld mark. The second helical line weld mark obtained in the second welding step surrounds the first helical line weld mark obtained in the first welding step.

In FIG. 7, the laser spot starts from a point B of the first helical line 614, moves from outside to inside, and ends at a point C of the first helical line 614 to form the first helical line weld mark. Then, the laser spot starts from a point D of the second helical line 616, moves from inside to outside, and ends at a point E of the second helical line 616 to form the second helical line weld mark. The sequence of forming the first helical line weld mark and the second helical line weld mark may also be reversed.

When forming the first helical line weld mark, because the laser spot starts at the point B, burst point is likely to occur at the point B, while the output is relatively stable when the laser spot moves to the point C, that is, the region close to the liquid injection hole 70 will be welded more reliably. Correspondingly, because the above movement direction is adopted, the penetration depth Tᵢ at the middle position of the first helical line weld mark will be greater than the penetration depth Tₒ at the edge position of the first helical line weld mark.

When forming the second helical line weld mark, because the laser spot starts at the point D and the output is relatively stable when the laser spot moves from inside to outside to the point E, that is, the second helical line weld mark will weld the outer portion more reliably. Correspondingly, the penetration depth Tᵢ at the middle position of the second helical line weld mark will be smaller than the penetration depth Tₒ at the edge position of the second helical line weld mark.

It should be noted that, because in this embodiment, the center trajectories of both the first helical line weld mark and the second helical line weld mark are not complete helical lines and do not extend to the helical line center, the "middle position" referred to in this embodiment is described in a relative sense as compared to the "edge position", that is, the middle position is a position closer to the center relative to the edge position, and the edge position is a position farther from the center relative to the middle position.

Through the above method, if the burst point occurs at the point B or the point D, since the region close to the liquid injection hole 70 and the outer peripheral portion of the second helical line 616 are both reliably welded, the path for electrolyte to flow toward the position where the burst point appears may be effectively blocked. Therefore, even if the burst point occurs, liquid leakage problems are not likely to occur.

After the liquid injection is completed, a sealing plug 71 (refer to FIG. 6) may be further filled in the liquid injection hole 70 to block the liquid injection hole 70 and improve the sealing performance of the secondary battery 1. The sealing plug 71 may be a rubber plug. After using the sealing plug 71 to block the liquid injection hole 70, the sealing pin 411 is filled in the groove 409, and welding of the sealing pin 411 and the positive electrode terminal 40 is completed.

In this embodiment, a portion (i.e., contact surface 413) where the wall portion 405 and the protruding portion 302 contact each other is annular, and the annular contact surface 413 has the annular central region 417 (i.e., the main portion of the contact surface 413), an inner edge region 415a (i.e., the annular portion of the contact surface 413 close to the liquid injection hole 70), and an outer edge region 415b (i.e., the annular portion of the contact surface 413 away from the liquid injection hole 70).

In the first welding step, along the first helical line 614, the laser spot moves starting from the point B located in the central region 417, rotates around the liquid injection hole 70 from outside to inside, and ends at the point C located in the inner edge region 415a. In the second welding step, along the second helical line 614, the laser spot moves starting from the point D located in the central region 417, rotates from inside to outside, and ends at the point E located in the outer edge region 415b. The edge regions 415 on both sides (inner edge region 415a and outer edge region 415b) surround the weld mark 60 in the central region 417. Because the edge regions 415 are both ending points, burst points are not likely to occur, the weld mark 60 has good quality and can be stably welded, isolation is formed at both sides for the weld mark in the central region 417, making the region where burst points may occur away from the region where liquid leakage may occur, thus reducing the possibility of liquid leakage.

In the assembly method for the secondary battery 1 provided by the above embodiments of the present disclosure, the optical magnification ratio of the laser spot in the welding step is 2.5 to 3.5 times, for example, a 3-time optical magnification ratio is adopted. By using the optical magnification ratio of 2.5 to 3.5 times, a beam waist radius may be increased and a depth of focus range may be improved, thereby obtaining a wider penetration depth range, which facilitates penetration through the wall portion 405 to reach the current collector 30.

In the assembly method for the secondary battery 1 provided by some embodiments of the present disclosure, the positive electrode terminal 40 is made of an aluminum material, and the laser used in the welding step is a red laser or an infrared laser with a wavelength of 600 mm to 1200 nm. Aluminum has a good absorption rate for laser in this wavelength range, and the cost of laser is relatively low.

In some embodiments, a laser galvanometer is adopted to control the movement of the laser spot. Using the laser galvanometer may improve a welding speed and has a good production efficiency. For example, the moving speed of the laser spot may be controlled at 300 mm/s or higher.

Additionally, the focus of the laser spot may be located on one side of the wall portion 405 away from the current collector 30. By setting the focus of the laser spot above a welding surface, as the penetration depth of the molten pool increases, the energy of the laser spot weakens accordingly. This control method is not likely to weld through the current collector 30, and may reduce the possibility of liquid leakage, thus improving product yield.

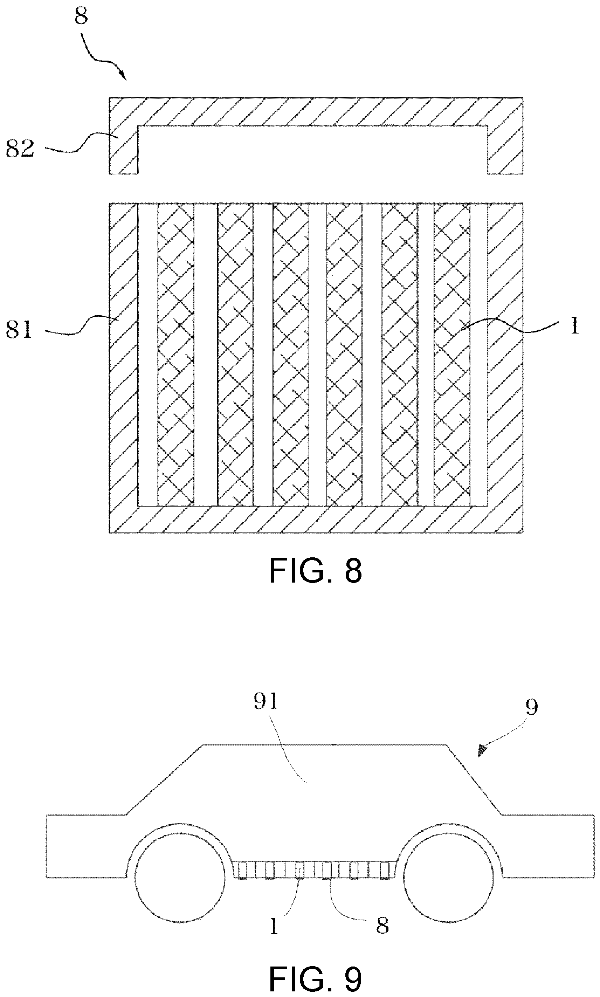

Please refer to FIG. 8, the present disclosure further provides a battery pack 8. The battery pack 8 includes the secondary battery 1 provided in any of the above embodiments. In an embodiment of the battery pack 8 of the present disclosure, the battery pack 8 includes a casing 81, a casing cover 82 and multiple secondary batteries 1. The multiple secondary batteries 1 are placed in the casing 81 and are connected in series or in parallel with each other, or in a combination of series and parallel connections. The casing cover 82 seals the casing 81 to protect the multiple secondary batteries 1. It should be noted that the battery pack 8 may also include portions such as a battery pack thermal management system and circuit boards in addition to the secondary battery 1 in the embodiments of the present disclosure. The battery pack 8 may be a battery module, a battery pack, an energy storage cabinet, and so on, which will not be elaborated one by one here.

Please refer to FIG. 9, the present disclosure further provides an electronic device 9. The electronic device 9 includes the above-mentioned battery pack 8. An operation portion 91 is electrically connected to the battery pack 8 to obtain electrical energy support. As an example, the electronic device 9 is a vehicle, the vehicle may be a fuel vehicle, a gas vehicle or a new energy vehicle. The new energy vehicle may be a pure electric vehicle, a hybrid vehicle or an extended-range vehicle, and so on, but is not limited thereto. The operation portion 91 is a vehicle body, the battery pack 8 is disposed at the bottom of the vehicle body, and provides electrical energy support for the operation of the vehicle or the operation of electrical components in the vehicle. However, in some other embodiments, the electronic device 9 may also be a mobile phone, a portable device, a laptop computer, a ship, a spacecraft, an electric toy and an electric tool, etc. The spacecraft includes aircraft, rockets, space shuttles and spaceships, and so on. The operation portion 91 may be a unit component that is capable of obtaining electrical energy from the battery pack 8 and performing corresponding work, such as a blade rotation unit of a fan, a dust suction working unit of a vacuum cleaner, etc. Electric toys include fixed or mobile electric toys, for example, game machines, electric car toys, electric ship toys and electric airplane toys, and so on. Electric tools include metal cutting electric tools, grinding electric tools, assembly electric tools and railway electric tools, for example, electric drills, electric grinders, electric wrenches, electric screwdrivers, electric hammers, impact drills, concrete vibrators and electric planers, etc. The embodiments of the present disclosure do not impose special restrictions on the above-mentioned electronic device 9.

In the technical solution of the present disclosure, by adopting a center trajectory of the laser spot in the form of a helix, the spot will not pass through the same point twice in the traveling path of the laser spot, which may reduce a thermal influence between two adjacent curved portions of the weld mark. In this way, the consistency of penetration depth is improved, and the stability of the welding process is ensured.

## Claims

1. An assembly method for a secondary battery (1), **characterized in that** the assembly method for the secondary battery (1) comprising the following steps:
an assembly step: assembling a current collector (30) and a terminal (40), so that a wall portion (405) of the terminal (40) abuts against the current collector (30);
a welding step: irradiating a laser spot on the wall portion (405), and moving the laser spot along a helical trajectory, welding the wall portion (405) and the current collector (30) to form a weld mark (60), wherein, on a cross-section passing through a terminal axis, the weld mark (60) extends from a first end (60a) to a second end (60b), the first end (60a) is located on a surface of the wall portion (405) facing away from the current collector (30), and the second end (60b) is located inside the current collector (30).

2. The assembly method for the secondary battery (1) according to claim 1, wherein in the welding step, the laser spot rotates from inside to outside along the helical trajectory.

3. The assembly method for the secondary battery (1) according to claim 1 or 2, wherein a center of the wall portion (405) is provided with a liquid injection hole (70), and in the welding step, the laser spot rotates around the liquid injection hole (70) from outside to inside along the helical trajectory.

4. The assembly method for the secondary battery (1) according to any one of claims 1 to 3, wherein a center of the wall portion (405) is provided with a liquid injection hole (70), and the welding step comprises:
a first welding step: the laser spot rotates around the liquid injection hole (70) from outside to inside along a trajectory of a first helical line (614) to form a first helical line weld mark;
a second welding step: the laser spot rotates from inside to outside along a trajectory of a second helical line (616) to form a second helical line weld mark;
the second helical line weld mark surrounds the first helical line weld mark.

5. The assembly method for the secondary battery (1) according to any one of claims 1 to 4, wherein a middle portion of the current collector (30) has a protruding portion (302) that protrudes toward one side of the terminal (40), a portion where the wall portion (405) and the protruding portion (302) contact each other constitutes a contact surface (413), the contact surface (413) has a central region (417) and an edge region (415),
in the welding step, a movement of the laser spot starts from the central region (417) and ends at the edge region (415), the weld mark (60) located in the edge region (415) surrounds the weld mark (60) located in the central region (417).

6. The assembly method for the secondary battery (1) according to any one of claims 1 to 5, wherein in the welding step, an optical magnification ratio of the laser spot is 2.5 to 3.5 times.

7. The assembly method for the secondary battery (1) according to any one of claims 1 to 6, wherein a wavelength of the laser spot is 600 nm to 1200 nm.

8. The assembly method for the secondary battery (1) according to any one of claims 1 to 7, wherein the helical trajectory is an Archimedean helical trajectory.

9. The assembly method for the secondary battery (1) according to any one of claims 1 to 8, wherein in the welding step, a laser galvanometer is utilized to control the laser spot to move along the helical trajectory at a speed of 300 mm/s or higher.

10. The assembly method for the secondary battery (1) according to any one of claims 1 to 9, wherein a focus of the laser spot is located on one side of the wall portion (405) away from the current collector (30).

11. A secondary battery (1), **characterized in that** the secondary battery (1) comprising:
a housing (101), comprising an end plate (105) and a side wall portion (103) surrounding the end plate (105), the end plate (105) having an opening portion (107);
an electrode assembly (20), accommodated inside the housing (101);
a current collector (30), disposed between the electrode assembly (20) and the end plate (105), and electrically connected to the electrode assembly (20);
a terminal (40), passing through the opening portion (107) and fixed to the end plate (105), the terminal (40) comprising a wall portion (405), the wall portion (405) being welded with the current collector (30) to form a weld mark (60), and the weld mark (60) having a helical trajectory,
wherein on a cross-section passing through a terminal axis, the weld mark (60) extends from a first end (60a) to a second end (60b), the first end (60a) is located on a surface of the wall portion (405) facing away from the electrode assembly (20), and the second end (60b) is located inside the current collector (30).

12. The secondary battery (1) according to claim 11, wherein a middle portion of the current collector (30) has a protruding portion (302) that protrudes toward one side of the terminal (40), a portion where the wall portion (405) and the protruding portion (302) contact each other constitutes a contact surface (413), the contact surface (413) has a central region (417) and an edge region (415), a movement direction of the weld mark (60) along a laser spot starts from the central region (417) and ends at the edge region (415), the weld mark (60) located in the edge region (415) surrounds the weld mark (60) located in the central region (417).

13. A battery pack (8), **characterized in that** the battery pack (8) comprising a plurality of secondary batteries (1), wherein the secondary battery (1) is the secondary battery (1) according to claim 11 or 12.

14. An electronic device (9), **characterized in that** the electronic device (9) comprising the battery pack (8) according to claim 13.
